# EUROPEAN PATENT APPLICATION

(11) **EP 0 626 277 A1**
(43) Date of publication of application: **30.11.1994**
(21) Application number: 93202981.2
(22) Date of filing: 26.10.1993
(51) Int. Cl.: B60B 31/02, F16B 23/00

(54) **An improved nipple for connecting a spoke to the rim of a spoked wheel**

(30) Priority: 26.05.1993 IT PD930061 U
(71) Applicant: ALPINA RAGGI S.p.A., I-20043 Arcore (MI) (IT)
(72) Inventor: Cappellotto, Guido, I-20043 Arcore (Milano) (IT)
(74) Representative: Cantaluppi, Stefano

(57) **Abstract**

A nipple is disclosed which has a head (3) formed with a drive slot (6) comprising at least two working surfaces (6a,b) set parallel at a distance from each other and defining respective shoulders, and respective helical ramp surfaces (8a,b) extending from the top of one of said working surfaces toward the bottom of the other, adjacent working surface.

## Description

This invention relates to an improved spoke nipple for connecting a spoke to the rim of a spoked wheel, which nipple has a head, located at an axial end and formed with a drive slot for engagement by a driver tool whereby said nipple can be rotated about its axis relative to the wheel spoke.

Nipples of the above-mentioned kind are conventionally employed in the fabrication of spoked wheels for securing the wheel spokes to the wheel rim in an adjustable fashion, as by threaded engagement of the nipples with threadways on the free ends of corresponding wheel spokes.

To facilitate the wheel assembly and adjustment operations, the head of each nipple is slotted to receive a driver tool, whereby the nipple can be driven rotatively. Such a driver tool may comprise, for example, a flat or a box screwdriver tool, an open or a socket wrench tool, as implied by the specific configuration of the slot.

The wheel assembly operation is usually carried out in three steps. During a first step, the wheel is pre-assembled, with the nipples just started along their respective spokes. For this first step, air-operated drivers are often used. During a second step, which may be carried out to advantage using adjustable torque electric screw drivers, the wheel is roughly trued up. During the third, and last, step a precision truing operation is performed with the possible use of robot systems having hands which grasp the nipples at a nipple shank portion which is polygonal in plan view.

The initial steps, specifically the wheel pre-assembly step, may be fairly critical. This criticalness results from the use of automatic drivers, particularly air-operated ones, which can attain very high rotational speeds, on the order of up to 7,500-10,000 rpm. Such rotational speeds of the tool make it difficult to correctly engage the tool with the drive slot in the nipple head. Especially where the slot is a plain one and the tool has a flat bit operated at high rpm, the above engagement may only occur after some idle rotations of the driver tool, thereby causing the latter to wear prematurely and perhaps damage the nipple head surface. Additionally to marring the appearance of the nipple, its damaged surface may defeat the protection afforded by any (nickel or zinc) plating provided.

It is the object of this invention to provide a nipple which can be screwed in/out with automatic drivers, while limiting, if not eliminating, the drawbacks with which the aforementioned prior art is beset.

This object is achieved, according to the invention, by an improved nipple of the kind outlined in the introductory clause, and characterized in that the slot has at least two working surfaces lying parallel and spaced apart from each other and defining respective shoulders for said driver tool and respective ramp surfaces which extend from the top of one of said working surfaces toward the bottom of the other, adjacent working surface.

The features and advantages of the invention will become apparent from the following detailed description of a preferred embodiment thereof, illustrated by way of example and not of limitation by the accompanying drawings, in which:
Figure 1 is a perspective view of a nipple according to the invention; and
Figure 2 is a detail view, in section, of a spoked wheel incorporating the nipple in Figure 1, at an assembly stage thereof.

In the drawing figures, generally shown at 1 is a nipple embodying this invention. The nipple 1 comprises a shank 2 having an axis X and an outward skirt which is partway cylindrical as at 2a and square prismatic for the remaining portion 2b. A threaded bore 4 extends axially through the nipple 1.

Also, the nipple 1 is formed with an enlarged head 3 having a substantially circular cylinder shape.

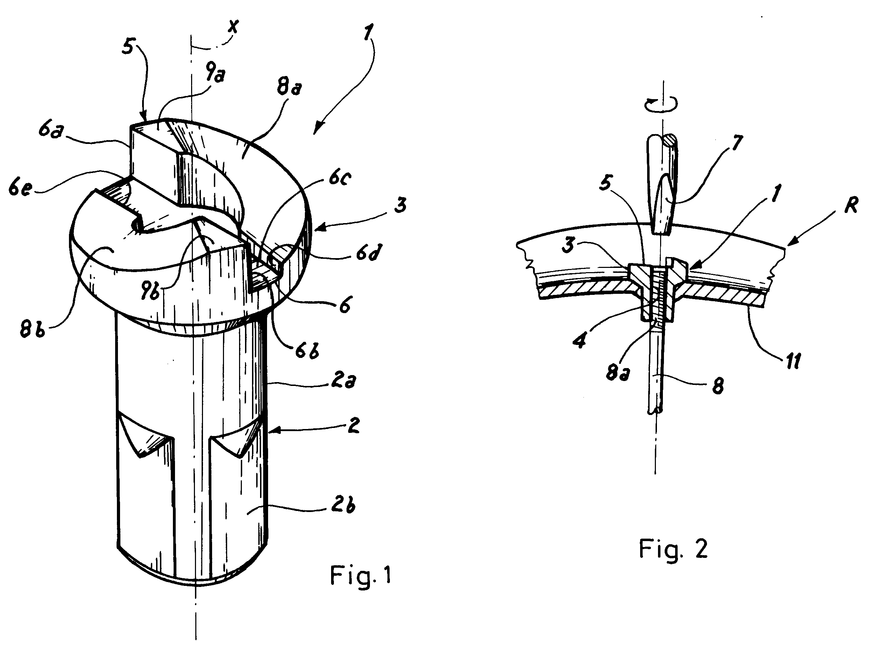

The opposite axial end of the head 3 from the shank 2 is formed with a slot 5 including a diametrically extending cut 6. The cut 6 has a bottom surface 6c whereon two walls stand opposite to each other which lie parallel to the axis X a mutual distance apart. These walls provide two working surfaces 6a,b, each defining a shoulder against which would abut a corresponding surface of a driver tool 7 (Figure 2) for screwing the nipple 1 onto a threaded end 8a of a wheel spoke 8, and two smaller auxiliary surfaces 6d,e on which the driver tool 7 would abut for unscrewing the nipple 1.

Finally, the slot 5 is also formed with two helical ramp surfaces 8a,b. The surface 8a extends from the uppermost area 9a of the working surface 6a toward the bottom of the working surface 6b, to meet the cut 6 at the top of the auxiliary surface 6d. Likewise, the surface 8b extends from the uppermost area 9b of the working surface 6b toward the bottom of the working surface 6a, to meet the cut 6 at the top of the auxiliary surface 6e.

At the assembly stage of a wheel R, the nipples 1, provided in a number matching that of the corresponding wheel spokes 8, are first inserted into sockets specially arranged around a wheel rim 11. The nipples are then screwed onto their respective wheel spokes using, for a tool, a driver tool 7 which is rotated as indicated by an arrow in Figure 2. The ramp surfaces 8a,b will guide the tool 7 to immediately engage the working surfaces 6a,b, thereby preventing both undue wear of the tool 7 from idle rotation, as mentioned, and damage to the surfaces of the slot 5.

It has been found that by having the ramp surfaces 8a,b serve as lead-in surfaces for the driver tool, a significant margin for productivity can be gained in terms of screwed nipples per unit time, thanks to a substantial reduction in downtime from idle rotation of the tool.

## Claims

1. An improved spoke nipple (1) for connecting a spoke (8) to the rim (11) of a spoked wheel, which nipple comprises a head (3), located at an axial end and formed with a drive slot (6) for engagement by a driver tool (7), whereby said nipple (1) can be rotated about its axis relative to the wheel spoke (8), characterized in that said slot (6) has at least two working surfaces (6a,b) lying parallel and spaced apart from each other and defining respective shoulders for said driver tool (7) and respective ramp surfaces (8a,b) which extend from the top (9a,b) of one of said working surfaces toward the bottom of the other, adjacent working surface.

2. A nipple according to Claim 1, wherein said ramp surfaces (8a,b) have a helical pattern.

3. A nipple according to either Claim 1 or 2, wherein said drive slot (6) comprises a cut extending diametrically across said head and delimited between said working surfaces, and said ramp surfaces (8a,b) extend from the free edge of the cut facing one of said working surfaces toward the top of the other, adjacent working surface.

4. A nipple according to one or more of the preceding claims, wherein said head is formed with a threaded axial bore (4) for engagement by the corresponding spoke (8), and said working and ramp surfaces (6a,b; 8a,b) extend crown-like around said bore (4).

5. A nipple according to one or more of the preceding claims, wherein said ramp surfaces (8a,b) slope down from the top toward the bottom of the working surfaces in the screwing direction of the nipple onto a spoke.
